# EUROPÄISCHE PATENTSCHRIFT

(11) **EP 0 898 176 B1**
(45) Veröffentlichungstag und Bekanntmachung des Hinweises auf die Patenterteilung: **02.06.2004**
(21) Anmeldenummer: 98112973.7
(22) Anmeldetag: 13.07.1998
(51) Int. Cl.: G01S 15/02, G01S 15/58

(54) **Verfahren zum Bestimmen von Entfernung und Geschwindigkeit eines Wasserfahrzeugs**
Method for determining the range and velocity of a water-craft
Procédé pour déterminer la distance et la vitesse d'un bâtiment marin

(30) Priorität: 22.08.1997 DE 19736552
(43) Veröffentlichungstag der Anmeldung: 24.02.1999
(73) Patentinhaber: ATLAS ELEKTRONIK GmbH, 28305 Bremen (DE)
(72) Erfinder: Arens, Egidius, 28832 Achim (DE)

(56) Entgegenhaltungen:
- GB-A- 1 330 472
- US-A- 4 998 224
- US-A- 5 212 490
- US-A- 5 481 504
- US-A- 5 555 532
- JIN ET AL: "The Estimation of Time Delay and Doppler Stretch of Wideband Signals" IEEE TRANSACTIONS ON SIGNAL PROCESSING, Bd. 43, Nr. 4, - 30. April 1995 (1995-04-30) Seiten 904-916, XP002128842 NEW YORK, US

## Beschreibung

Die Erfindung betrifft ein Verfahren zum Bestimmen von Entfernung und Geschwindigkeit eines Wasserfahrzeugs aus der Ambiguity-Funktion der im Anspruch 1 genannten Art.

In Sonaranlagen werden Wasserfahrzeuge erkannt und geortet, indem ein Sendeimpuls ausgesendet und von Wasserfahrzeugen reflektierte Anteile richtungsselektiv als Echosignale empfangen werden. Die Echosignale werden bezüglich Laufzeit zwischen Senden und Empfangen und Frequenzverschiebung zwischen Sende- und Empfangsfrequenz aufgrund des Dopplereffekts ausgewertet, um Entfernung und Geschwindigkeit jedes Wasserfahrzeugs in Richtung zum Empfangsort zu ermitteln.

Zum Bestimmen von Entfernung und Geschwindigkeit werden Mustersignale verwendet, die aus dem Sendeimpuls durch Frequenz- und Zeitverschiebung abgeleitet werden. Abhängig von der Entfernungs- und Geschwindigkeitsauflösung ist die Anzahl der Mustersignale, die zum Vergleich mit dem Echosignal abgespeichert werden. Stimmen Echosignal und Mustersignal exakt überein, so gibt Zeitverschiebung und die entsprechend dem Dopplereffekt vorgenommene Frequenzverschiebung des Mustersignals die Entfernung und Geschwindigkeit des Wasserfahrzeugs in Richtung zum Empfangsort an. Durch Korrelation des Echosignals mit sämtlichen Mustersignalen werden Entfernung und Geschwindigkeit ermittelt. Das Korrelationsergebnis weist ein Maximum auf, wenn Echo- und Mustersignal identisch sind. Abweichungen führen zu einer Verringerung dieses Wertes. Zeit- und Frequenzabweichung zwischen Echosignal und Mustersignal, d.h. Entfernungs- und Geschwindigkeitsfehler für das Korrelationsergebnis sind als sog. Ambiguity-Funktion in einer Zeit-Frequenz-Ebene oder Entfernungs-Geschwindigkeits-Ebene darstellbar. Die Ambiguity-Funktion weist beim Fehler "Null", also im Ursprung der Zeit-Frequenz-Ebene, ihr Maximum auf und wird abhängig von der gewählten Signalform des Sendeimpulses bei Frequenz- oder Zeitabweichungen kleiner.

Da die Dopplerverschiebung sowohl in die Entfernungs- wie auch in die Geschwindigkeitsbestimmung eingeht, wird die Signalform des Sendesignals abhängig von der Aufgabenstellung gewählt. Sendeimpulse mit kontinuierlichen Wellen einer einzigen Frequenz, sog. CW-Impulse, werden verwendet, wenn die Geschwindigkeitsmessung im Vordergrund steht. Ihre Genauigkeit ist abhängig von der Impulslänge und nimmt mit steigender Impulslänge zu. Sendeimpulse mit linear frequenzmodulierten Wellen, sog. LFM-Impulse sind weniger dopplerempfindlich und besser geeignet für die Entfernungsmessung, deren Genauigkeit mit steigender Bandbreite zunimmt.

Die Ambiguity-Funktion eines CW-Impulses großer Impulslänge weist die Form eines Messerrückens entlang der Entfernungsachse auf, d.h. der CW-Impuls liefert immer den Maximalwert der Ambiguity-Funktion, wenn die Frequenz des Referenzsignals gleich der dopplerverschobenen Frequenz des Empfangssignals ist oder eine geringe Abweichung aufweist. Zeitverschiebungsfehler hingegen führen nicht zu einem steilen Abfall des Wertes der Ambiguity-Funktion. Der CW-Impuls liefert also eine gute Geschwindigkeitsauflösung (vgl. z. B. "Radar Handbook", M. I. Skolnik, McGraw-Hill Book Company, 1970, 3-17 und 3-20), die um so größer ist, je größer die Impulslänge ist.

Zur Erzielung großer Reichweiten sind große Impulslängen notwendig. Sendeimpulse in Form von CW-Impulsen großer Impulslänge sind aber für Entfernungsmessungen ungeeignet. Für diese Aufgabe sind Sendeimpulse mit linear frequenzmodulierten Wellen, sog. LFM-Impulse, besser geeignet. Ihre Ambiguity-Funktion weist ebenfalls die Form eines Messerrückens auf, der jedoch in der Zeit-Frequenz-Ebene gegenüber der Ambiguity-Funktion des CW-Impulses zur Frequenzachse hin gedreht ist und zur Zeit-Achse einen Winkel einschließt, so daß auch bei Mustersignalen, die eine größere Frequenzabweichung gegenüber dem Empfangssignal aufweisen, eine Entfernungsmessung mit geringem Fehler möglich ist.

In dem Buch "Principles of High-Resolution Radar", A. W. Rihaczek, McGraw-Hill Book Company, 1969, Seite 184, wird angegeben, daß Breite und Drehung des Messerrückens der Ambiguity-Funktion in der Zeit-Frequenz-Ebene dadurch beeinflußbar sind, daß während der Impulslänge die Sendefrequenz nicht linear über der Zeit, sondern quadratisch oder kubisch ansteigt. Die mit einem solchen Sendeimpuls erzielbare Empfindlichkeit der Geschwindigkeitsmessung ist wesentlich geringer als beim linear frequenzmodulierten Impuls, die Empfindlichkeit der Entfernungsmessung hingegen größer.

Aus der US-PS 5 481 504 ist ein Verfahren zur Zielortung bekannt, bei dem bei gleicher Anzahl der Dopplerkanäle zum Berechnen der Ambiguity-Funktion und damit gleicher Anzahl der Mustersignale die Genauigkeit der Geschwindigkeitsbestimmung dadurch erhöht wird, daß die Frequenz während der Impulslänge des Sendeimpulses nach einer irrationalen Funktion berechnet wird, deren Exponent einen Wert zwischen Null und eins aufweist.

Um sowohl bei der Entfernungs-, wie auch bei Geschwindigkeitsbestimmungen gleiche Auflösungen zu erhalten, werden beispielsweise Impulszüge verwendet, die von Impuls zu Impuls wechselnde Mittenfrequenzen und Frequenz- oder Phasenmodulationen aufweisen und nach einem Zufalls-Code gewählt werden. Das Zentralmaximum ihrer Ambiguity-Funktion wird mit einer Heftzwecke im Ursprung der Zeitfrequenzebene verglichen und heißt Thumbtack-Ambiguity-Function.

Aus der US-PS 5 251 186 ist eine Aktivsonaranlage bekannt, bei der mit Hilfe von adaptiven Verfahren Einfallsrichtungen von Echosignalen von ausgesendeten linearfrequenzmodulierten Sendeimpulsen mit großem Zeitbandbreiteprodukt ermittelt werden und über Zeitfenster die Entfernungen zu reflektierenden Wasserfahrzeugen bestimmt werden.

In der US-PS 4 998 224 sind Sendeimpulse angegeben, deren Frequenzzeitverlauf optimiert ist, so daß Nachhallstörungen ein Minimum aufweisen. Der Sendeimpuls wird dazu in zeitlich lückenlos aufeinanderfolgende Subimpulse unterteilt, deren Frequenzbreite einen Bruchteil der gesamten Bandbreite aufweisen und deren Mittenfrequenzen innerhalb der Bandbreite hin- und herspringen, so daß die gesamte Bandbreite innerhalb der Pulsdauer abgedeckt wird. Die zugehörige Dopplerauswertung zur Geschwindigkeitsbestimmung besteht aus einer Grob- und einer Feinauswertung durch Korrelation mit Mustersignalen.

Eine Optimierung der Sendesignale wird in dem Aufsatz "The Estimation of Time Delay and Doppler Stratch of Wideband Signals" aus IEEE Transactions on Signal Processing, Vol. 43, No. 4, April 1995, Seiten 904 bis 916 von Qu Jin, Kon Max Wang und Zhi-Quan Luo, beschrieben. Die Sendesignale weisen ein großes Zeit-Bandbreite-Produkt auf und liefern auch bei niedrigem Nutz/Störverhältnis Ambiguity-Funktionen mit ausgeprägtem Maximum. Es ist dort auf Seite 912 eine Modulationsart angegeben, deren Ambiguity-Funktion sich durch einen schmalen Piek auszeichnet und deren Nebenmaxima stark abgesenkt sind. Eine Störbefreiung wird durch eine Sequenz von aneinandergereihten Sendeimpulsen erzielt. Die Verratswahrscheinlichkeit ist auch bei enormen Impulslängen wegen der möglichen, geringen Amplituden und der einem Rauschprozeß entsprechenden Struktur klein, auch wenn große Reichweiten erzielt werden sollen.

Es ist Aufgabe der vorliegenden Erfindung, ein Verfahren der im Oberbegriff des Anspruchs 1 genannten Art zu schaffen, bei dem die Messung der Entfernung und Geschwindigkeit eines Wasserfahrzeugs auch bei einer gestörten Ausbreitung des Sendeimpulses nicht beeinträchtigt wird und die Verratswahrscheinlicheit nicht erhöht wird.

Diese Aufgabe wird erfindungsgemäß durch die im Kennzeichen des Anspruchs 1 genannten Merkmale gelöst.

Die Erfindung geht von der Überlegung aus, daß Sendeimpulse mit sehr großem Zeit-Bandbreite-Produkt im Gegensatz zu kurzen Sendeimpulsen schon aufgrund der langen Ausbreitungswege durch die wechselnde Struktur des Meeres sowohl durch Reflexionen an der Wasseroberfläche und am Grund, als auch auf direktem Weg zum Reflexionsort verformt und stark beeinflußt werden.

Die Ausbreitung der Schallwellen auf direktem Weg erfolgt durch Wasserschichten, die sich durch unterschiedliche Salzgehalte, Temperaturen und Wasserströmungen auszeichnen. Für viele Seegebiete sind diese Daten abhängig von der Jahres- oder Tageszeit in Karten- oder Tabellenform bekannt. Beeinflußt wird die Ausbreitung der Schallwellen insbesondere auch durch Reflexionen an Grenzen dieser Wasserschichten und/oder an der Wasseroberfläche oder am Meeresgrund. Aber auch unterschiedliche Typen von Meereswellen verändern den zeitlichen Verlauf der Schallwellen während ihrer Ausbreitung, insbesondere Oberflächenwellen und interne Wellen.

Die Oberflächenwellen werden durch Luftdruck- und Windschwankungen hervorgerufen und sind als Seegang und Dünung bekannt. Sie erreichen Wellenamplituden bis zu 30 m, Wellenlängen bis zu 1000 m und Wellenperioden von einigen wenigen Sekunden bis zu einer halben Minute Dauer. Durch Beobachtung der See wird beispielsweise die Stärke des Seegangs bestimmt.

Interne Wellen bilden sich in den Wasserschichten aus und machen sich durch periodische Schwankungen von Flächen gleicher Dichte, z.B. Isothermen bei konstantem Salzgehalt, bemerkbar. Man beobachtet interne Gezeiten. Durch Strömungsmessungen oder Stromatlanten der Seegebiete sind die charakteristischen Merkmale der internen Wellen bestimmbar.

Turbulenzen sind ungeordnete Störungen einer geordneten Bewegung im Meer. Sie treten an einer oberflächennahen Schicht auf, die durch Wind, Wärmeabgabe an die Atmosphäre oder Eisbildung durchmischt wird oder an der Bodenschicht durch Bodenreibung oder in Gebieten bei Brechung interner Wellen. Flächen mit Turbulenzen in Form von Wirbeln mit Durchmessern bis zu mehreren 100 km gibt es im gesamten Weltmeer. Insbesondere in Gebieten starker Stromscherung, z.B. im äquatorialen Stromsystem und den westlichen Randströmen. Sie sind durch entsprechende Seekarten bekannt.

Sämtliche Meereswellen, Oberflächenwellen, interne Wellen oder Turbulenzen beeinflußen die Ausbreitung von Schallwellen und somit auch die Ausbreitung eines ausgesendeten Sendeimpulses und machen sich besonders dann störend bemerkbar, wenn Schallwellen großer Bandbreite über viele Sekunden ausgesendet werden und sich in einem Seegebiet über große Distanzen ausbreiten und an weit entfernten Wasserfahrzeugen reflektiert werden. Abhängig von der Wetterlage sind in einem bekannten Seegebiet Übertragungskanäle für Schallwellen und ihre Einflüsse auf die ausgesendeten Schallwellen bestimmbar und werden erfindungsgemäß den Mustersignalen aufgeprägt, mit denen die empfangenen Echosignale korreliert werden, um die Ambiguity-Funktion zu bestimmen. Übertragungseigenschaften des Übertragungskanals führen zu einer zusätzlichen Frequenz- und Laufzeitverschiebung der Echosignale in der gleichen Größenordnung wie die Entfernungsauflösung bei der Ortsbestimmung und wie mögliche Geschwindigkeiten eines zu ortenden Wasserfahrzeugs. Die Frequenzverschiebung entsteht durch Strömungen oder Turbulenzen, die Laufzeitverschiebung durch Temperaturstrukturen im Mikrobereich. Durch Seegang wird eine Verbreiterung des gesamten Frequenzspektrums der Echosignale bewirkt. Der Vorteil des erfindungsgemäßen Verfahrens nach Anspruch 1 besteht darin, daß durch Beobachtung des Seegebiets diese Fehlereinflüsse bei der Ortung des Wasserfahrzeugs und der Bestimmung seiner Geschwindigkeit erkannt und durch Anpassung der Mustersignale ausgeschaltet werden können. An Bord eines Trägerfahrzeugs für eine aktive Sonarortungsanlage, von der die Sendeimpulse ausgesendet und Echosignale empfangen und ausgewertet werden, sind die notwendigen Informationen durch Wetterbericht, Seekarten und Stromatlanten ohnehin vorhanden, so daß der Vorteil besteht, daß ohne zusätzliche langwierige Messungen mögliche Frequenz- und Zeitverschiebungen der Echosignale auf dem Übertragungsweg qualitativ erfaßbar sind und berücksichtigt werden können.

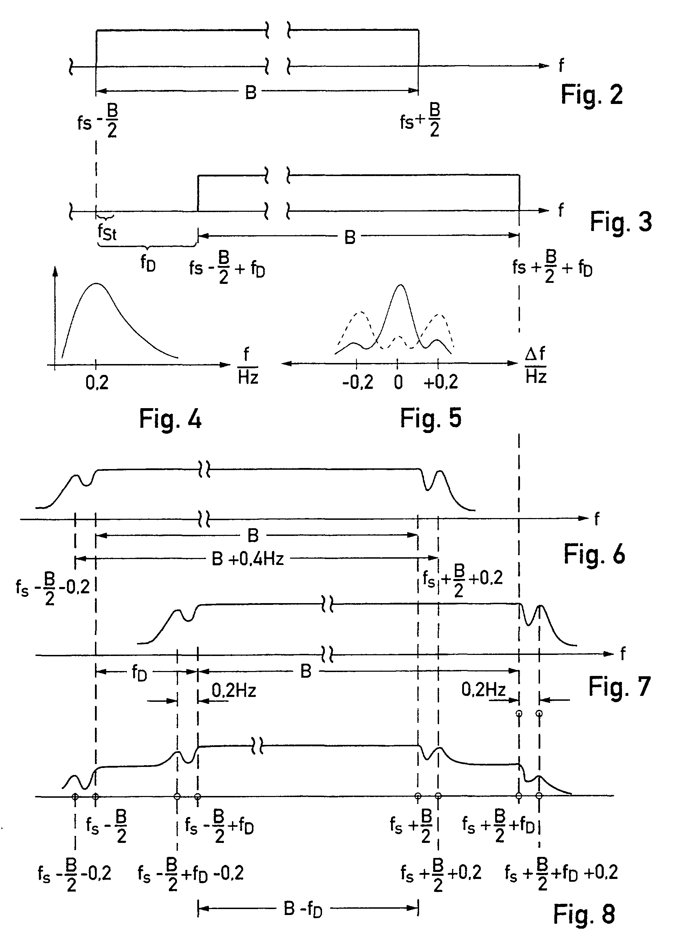

Der Einfluß des Seegangs auf Schallwellen, die an der Wasseroberfläche reflektiert werden, ist aus "Sound Propagation in the Sea", Robert J. Urik, 1982, Library of Congreß Catalog Card No. 82-081923, insbesondere Kapitel 10, Seite 10-8 bekannt. In Fig. 8 sind die Auswirkungen bei der Reflexion einer monochromatischen Schallwelle an einer Wasseroberfläche, die durch Seegang auf und ab bewegt wird, dargestellt. Die reflektierte Schallwelle ist amplitudenmoduliert und ihr Frequenzspektrum weist nicht nur eine Spektrallinie auf, wie das Sendesignal, sondern dazu Seitenbänder, die um so ausgeprägter sind, je höher der Seegang ist. Diese Eigenschaft des Seegangs wirkt sich auch auf einen Sendeimpuls großer Bandbreite aus und vergrößert den Frequenzumfang seines Echosignales abhängig von der Stärke des Seegangs. Der Vorteil des erfindungsgemäßen Verfahrens nach Anspruch 2 besteht darin, daß durch die Modulation, die dem Mustersignal abhängig vom beobachteten Seegang aufgeprägt wird, der Verlauf der Ambiguity-Funktion unverfälscht erhalten bleibt und somit auch bei Seegang eine exakte Orts- und Geschwindigkeitsbestimmung des reflektierenden Wasserfahrzeugs garantiert ist.

Bei Wasserturbulenzen ist ebenfalls eine Erweiterung des Frequenzumfangs, der unabhängig von der Sendefrequenz ±0,5 Hz beträgt, für die Mustersignale vorteilhaft, die in der Weiterbildung des erfindungsgemäßen Verfahrens nach Anspruch 3 angegeben ist.

Der Vorteil des erfindungsgemäßen Verfahrens nach Anspruch 4 besteht darin, daß Strömungsgeschwindigkeiten zu möglichen Geschwindigkeitswerten eines reflektierenden Wasserfahrzeugs unter Berücksichtigung ihres Vorzeichens addiert werden und daraus Frequenzverschiebungen der Mustersignale berechnet werden, so daß die mit diesen Mustersignalen gebildete Ambiguity-Funktion unmittelbar fehlerfrei Geschwindigkeit und Entfernung des Wasserfahrzeugs angibt.

Horizontale Bewegungen der Wasseroberfläche, die durch Wind und Wellen hervorgerufen werden, führen zu einer Dopplerverschiebung des Frequenzspektrums der Echosignale, vertikale Bewegungen zu einer Modulation der reflektierten Schallwellen und zusammen mit auftretenden Turbulenzen zu einer Vergrößerung des Frequenzspektrums der Echosignale. Gemäß der vorteilhaften Weiterbildung des erfindungsgemäßen Verfahrens nach Anspruch 5 wird festgestellt, welche Eigenschaften der Übertragungskanal für die ausgesendeten Schallwellen im Nahbereich aufweist, indem das empfangene Echosignale mit dem Sendeimpuls demoduliert wird. Eine Modulation durch die Bewegungen der Wasseroberfläche liefert dann ein Seegangssignal, dessen Mittenfrequenz bei Strömung dopplerverschoben ist. Mit diesem Seegangssignal wird das Mustersignal moduliert. Der Vorteil des erfindungsgemäßen Verfahrens nach Anspruch 5 besteht insbesondere darin, daß ohne die Beobachtung des Meeresgebiets durch einen erfahrenen Seemann Übertragungseigenschaften des Seegebiets im Nahbereich bestimmt werden und abhängig von einem verschiebbaren Zeittor, innerhalb dessen auswertbare Echosignale empfangen werden, der Bereich ausgedehnt werden kann, um die Übertragungseigenschaften für Schallwellen kennenzulernen und die Mustersignale zu adaptieren.

Zur Ermittlung des Übertragungsverhaltens wird anstelle einer Demodulation bei der Weiterbildung des erfindungsgemäßen Verfahrens nach Anspruch 6, das Frequenzspektrum eines im Nahbereich reflektierten und empfangenen Echosignals ermittelt. Das Frequenzspektrum wird mit dem Frequenzspektrum des Sendeimpulses verglichen. Da das Echosignal nicht an einem Wasserfahrzeug reflektiert wurde, sondern an der Wasseroberfläche oder an Schichtungen im Wasser, gibt eine Frequenzverschiebung Strömungsgeschwindigkeiten und Seegang an. Besonders vorteilhaft ist es, das Echosignal des zuletzt gesendeten Teils des Sendeimpulses zu verwenden. Die Frequenzverschiebungen sind in der gleichen Größenordnung wie die möglichen Dopplerverschiebungen, die durch die Geschwindigkeit eines reflektierenden Wasserfahrzeugs hervorgerufen werden, und werden vorzeichenrichtig bei der Erstellung der Mustersignale hinzuaddiert. Bei der Auswertung der Ambiguity-Funktion ergibt die Lage des Maximums unmittelbar Geschwindigkeit und Entfernung des reflektierenden Wasserfahrzeugs an. Der Vorteil des erfindungsgemäßen Verfahrens nach Anspruch 6 besteht insbesondere darin, daß durch eine einfache Fast-Fourier-Transformation der Echosignale die Übertragungsfunktion des Übertragungskanals für den ausgesendeten Sendeimpuls bestimmt werden kann. Weiterhin ist von Vorteil, daß die Geschwindigkeitsbestimmung von großer Zuverlässigkeit ist, da die durch den Übertragungskanal verursachten und erfindungsgemäß berücksichtigten Frequenzverschiebungen in die Dopplerverschiebungen eingegangen sind, die durch die Geschwindigkeit des reflektierenden Wasserfahrzeugs hervorgerufen werden. Auch hier besteht wieder der Vorteil, den Zeitbereich vom Nahbereich weiter weg zu verschieben, wobei die Grenze natürlich dadurch bestimmt ist, ob überhaupt Echosignale empfangen werden können, die an Grenzschichten und nicht von einem Wasserfahrzeug reflektiert wurden.

Bei der Weiterbildung des erfindungsgemäßen Verfahrens nach Anspruch 7 wird festgestellt, ob nur eine Frequenzverschiebung oder auch eine zusätzliche Vergrößerung des Frequenzbereichs des Frequenzspektrums des empfangenen Echosignals zu verzeichnen ist, da der Schallimpuls in einem Gebiet mit Seegang und/oder turbulentem Wasser reflektiert wurde. Diese Frequenzvergrößerung wird den Mustersignalen aufgeprägt, indem die den einzelnen Geschwindigkeiten entsprechenden Mustersignale ein Frequenzspektrum aufweisen, das entsprechend bis zu 0,5 Hz vergrößert ist. Die angepaßte Frequenzbereichserweiterung sorgt für eine Störbefreiung der Echosignale und eine Geschwindigkeitsauflösung.

In manchen Meeresgebieten erfolgt die Ausbreitung von Schallwellen vorzugsweise längs der Wasseroberfläche aufgrund der speziellen Wasserschichtungen. Ebenso ist davon auszugehen, daß bei einem thermischen Mikrostrukturwechsel Laufzeitvariationen von 0,1 bis 1 ms auftreten. Diese Laufzeitvariationen werden dem Mustersignal gemäß der vorteilhaften Weiterbildung nach Anspruch 8, abhängig vom Weg, den der Sendeimpuls zurücklegen wird, aufgeprägt und somit bei der Entfernungsbestimmung des reflektierenden Wasserfahrzeugs berücksichtigt.

Aus der mit der Ambiguity-Funktion ermittelten Laufzeit wird die Entfernung zum reflektierenden Wasserfahrzeug dadurch bestimmt, daß die Laufzeit mit der Schallgeschwindigkeit multipliziert wird. Die Schallgeschwindigkeit ist abhängig von der Temperatur der Wasserschicht und wird gemäß der vorteilhaften Weiterbildung nach Anspruch 10 mit einem Kompensationsterm korrigiert, der gleich der dreifach gemessenen oder Tabellen entnommenen Temperatur des betrachteten Seegebiets in °C ist. Der Vorteil des erfindungsgemäßen Verfahrens nach Anspruch 9 besteht darin, daß, ausgehend von einer mittleren Schallgeschwindigkeit für das Seegebiet einzelne Temperaturunterschiede in begrenzten Gebieten innerhalb des Seegebiets berücksichtigt werden können, ohne daß ganz genau die Schallgeschwindigkeit in diesem Gebiet bestimmt werden muß.

Die Erfindung ist in einem in der Zeichnung dargestellten Ausführungsbeispiel für ein Verfahren zum Bestimmen von Entfernung und Geschwindigkeit eines Wasserfahrzeugs näher beschrieben. Es zeigen:
- Fig. 1: der Frequenzverlauf eines Sendeimpulses über der Zeit,
- Fig. 2: ein Frequenzspektrum des Sendeimpulses,
- Fig. 3: ein dopplerverschobenes Frequenzspektrum,
- Fig. 4: ein Seegangsspektrum,
- Fig. 5: ein Seegangsfrequenzspektrum,
- Fig. 6: ein Nachhallspektrum,
- Fig. 7: ein Reflexionsfrequenzspektrum und
- Fig. 8: ein Echofrequenzspektrum.

Mit einer Aktivsonaranlage wird ein Sendeimpuls einer Mittenfrequenz fₛ einer Bandbreite B und einer Impulslänge T ausgesendet. Das Produkt B.T ist größer als 10000. Empfangene Echosignale werden nach ihrer Einfallsrichtung der Laufzeit zwischen Senden und Empfangen und ihrer Doppler-Frequenzverschiebung durch Bilden der Ambiguity-Funktion ausgewertet, um Ort und Geschwindigkeit eines reflektierenden Wasserfahrzeugs zu bestimmen.

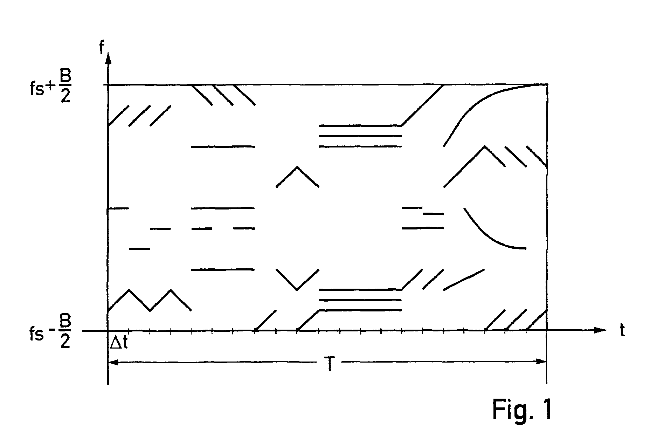

Der Sendeimpuls setzt sich beispielsweise aus kurzen rauschähnlichen Subimpulsen der Länge Δt λ1s zusammen, deren Unterbandbreiten ΔB innerhalb der Bandbreite B liegen. Fig. 1 zeigt einen Frequenzverlauf eines solchen Sendeimpulses über der Impulslänge T, der insgesamt wie ein Rauschen innerhalb der Bandbreite B wirkt. Eine andere Verwürfelung oder ein anderer Frequenzverauf der Subimpulse ist ebenfalls möglich. Ein solcher Sendeimpuls hat ein Frequenzspektrum, wie es in Fig. 2 gezeigt ist. Dieses Frequenzspektrum wird durch Reflexion an einem Wasserfahrzeug, das eine Geschwindigkeitskomponente in Richtung zum Empfangsort aufweist, und durch Strömungsgeschwindigkeiten längs des Übertragungskanals für den Schallimpuls um eine Dopplerfrequenz f_{d} verschoben, wie es in Fig. 3 gezeigt. In dieser Dopplerfrequenzverschiebung f_{d} sind Terme f_{St} enthalten, die auf die Strömungsgeschwindigkeiten in Wasserschichten des Übertragungskanals zurückzuführen sind.

Wird eine Schallwelle einer Frequenz f₀ an einer Wasseroberfläche reflektiert, die eine Auf- und Abbewegung aufgrund von Seegang durchführt, so wird die Schallwelle mit dem Seegangsspektrum, wie es in Fig. 4 gezeigt ist, moduliert. Es wird eine reflektierte oder rückgestreute Schallwelle empfangen, die ein Seegangsfrequenzspektrum aufweist, das in Fig. 5 gezeigt ist. Der durchgezogene Verlauf stellt sich bei niedrigem Seegang, der gestrichelte Verlauf bei hohem Seegang ein. Man erkennt bei den Frequenzen ±200 mHz Seitenbänder um die ausgesendete Frequenz, die um so stärker ausgeprägt sind, je höher der Seegang ist.

Genau die gleiche Amplitudenmodulation tritt auch bei einem breitbandigen Sendeimpuls der Bandbreite B und der Impulslänge T auf, wie er in Fig. 1 gezeigt ist. Das in Fig. 2 gezeigte Frequenzspektrum des Sendeimpulses wird durch Reflexionen und Streuungen an der Wasseroberfläche im Nahbereich in seinem Frequenzumfang vergrößert. Empfangener Nachhall des Sendeimpulses weist ein Nachhallspektrum auf, das in Fig. 6 gezeigt ist. Der Frequenzumfang dieses Nachhallspektrums hat sich durch die Seitenbänder von ±200 mHz abhängig vom Seegang vergrößert. Das Nachhallspektrum beginnt bei der Frequenz fₛ-B/2-0,2 Hz und endet bei der Frequenz fₛ+B/2+0,2 Hz.

Der Schallimpuls mit dem Frequenzspektrum gemäß Fig. 2 breitet sich auf direktem Weg bis zum reflektierendem Wasserfahrzeug aus, wird unterwegs ggf. durch Wasserströmungen und Turbulenzen dopplerverschoben und durch die Geschwindigkeitskomponente des Wasserfahrzeugs in Richtung zum Empfangsort um einen weiteren Betrag frequenzverschoben, dessen Summe die Frequenzverschiebung f_{d} bewirkt. Fig. 3 zeigt das Frequenzspektrum der reflektierten Schallwelle, die sich auf direktem Weg vom Sender zum reflektierenden Wasserfahrzeug und zurück einstellt. Dieser reflektierten Schallwelle überlagern sich während der gesamten Sende- und Empfangszeit an den Grenzen des Übertragungskanals reflektierte Anteile, insbesondere auch die an der bewegten Wasseroberfläche reflektierten Anteile der ausgesendeten Schallwelle und gelangen über diesen Umweg zum Wasserfahrzeug und werden dort ebenfalls reflektiert und ergeben ein Reflexionssignal, dessen Reflexionsfrequenzspektrum in Fig. 7 gezeigt ist.

Außerdem werden die Schallwellen des Sendeimpulses auch an der bewegten Wasseroberfläche zum Empfangsort rückgestreut und zusätzlich den vom Wasserfahrzeug reflektierten zurückkehrenden Schallwellen überlagert, so daß sich dem dopplerverschobenen Reflexionsfrequenzspektrum gemäß Fig. 7 das Nachhallspektrum gemäß Fig. 6 überlagert zu einem Echofrequenzspektrum des empfangenen Echosignals, wie es in Fig. 8 gezeigt ist. Gegenüber dem Frequenzspektrum des Sendeimpulses ist das Echofrequenzspektrum des empfangenen Echosignals frequenzverschoben und verbreitert.

Abhängig vom Übertragungsverhalten des Übertragungskanals sind die Pegelhöhen der einzelnen Bestandteile des empfangenen Echofrequenzspektrums, so daß keine Aussage darüber getroffen werden kann, welcher Teil des Empfangsspektrums im empfangenen Echosignal vorliegt, der außerhalb der Bandbreite B-f_{d} liegt, und mit welcher Frequenz dieses Echofrequenzspektrum beginnt und endet. Um trotzdem eine Ambiguity-Funktion des Empfangssignals mit einem Mustersignal zu erzeugen, dessen Maximum die Frequenzverschiebung und Zeitverschiebung zwischen gesendenten und empfangenen Impuls angibt, werden Mustersignale erzeugt, die an die Veränderungen angepaßt sind.

Die relevanten Veränderungen werden entweder aus Seekarten, Strömungsbeobachtungen oder Messungen des Nachhallspektrums ermittelt und den Mustersignalen aufgeprägt.

## Patentansprüche

1. Verfahren zum Bestimmen von Entfernung und Geschwindigkeit eines Wasserfahrzeugs aus der Ambiguity-Funktion, bei dem am Wasserfahrzeug reflektierte Sendeimpulse, die Schallwellen mit einem großen Zeit-Bandbreite-Produkt aufweisen, als Echosignale empfangen und mit einem Satz von aus den Sendeimpulsen abgeleiteten dopplerfrequenzverschobenen und laufzeitverschobenen Mustersignalen verglichen werden, die Geschwindigkeiten und Entfernungen des zu ortenden Wasserfahrzeugs vorgeben, **dadurch gekennzeichnet, daß** aus an Bord vorliegenden Daten über Seegang, Wasserströmungen, Wasserturbulenzen oder eine Mikrotemperaturstruktur für große Distanzen eines Seegebiets frequenzabhängige und/oder laufzeitabhängige Übertragungseigenschaften für die ausgesendeten, sich in dem Seegebiet ausbreitenden und zurückkehrenden Schallwellen ermittelt und den Mustersignalen aufgeprägt werden.

2. Verfahren nach Anspruch 1, **dadurch gekennzeichnet, daß** bei Seegang das Mustersignal mit einem Seegangssignal der Mittenfrequenz von 200 mHz und einer von der Stärke des Seegangs abhängigen Seegangsbandbreite bis zu 20 mHz moduliert wird.

3. Verfahren nach einem der Ansprüche 1 bis 2, **dadurch gekennzeichnet, daß** bei turbulentem Wasser die Mustersignale um ±0,5 Hz in ihrem Frequenzumfang erweitert werden.

4. Verfahren nach Anspruch 1 oder 2, **dadurch gekennzeichnet, daß** aus Stromatlanten des Seegebiets Strömungsgeschwindigkeiten ermittelt werden, und zugehörige Dopplerverschiebungen berechnet und den Mustersignalen als Frequenzverschiebung aufgeprägt werden.

5. Verfahren nach Anspruch 1, **dadurch gekennzeichnet, daß** aus einem Nahbereich reflektierte und empfangene Echosignale mit dem Sendeimpuls demoduliert werden und ein Seegangssignal liefern, mit dem die Mustersignale moduliert werden.

6. Verfahren nach Anspruch 1, **dadurch gekennzeichnet, daß** ein Frequenzspektrum von einem aus einem Nahbereich reflektierten und empfangenen Echosignal ermittelt wird und eine Frequenzverschiebung zum Sendeimpuls bestimmt wird, daß die Frequenzverschiebung als zusätzliche Dopplerverschiebung den Mustersignalen aufgeprägt wird.

7. Verfahren nach Anspruch 1 oder 6, **dadurch gekennzeichnet, daß** ein Frequenzspektrum von einem aus einem Nahbereich reflektierten empfangenen Echosignal ermittelt wird und eine Vergrößerung des Frequenzumfangs gegenüber dem Sendesignal bestimmt wird und den Mustersignalen aufgeprägt wird.

8. Verfahren nach einem der Ansprüche 1 bis 5, **dadurch gekennzeichnet, daß** abhängig von der Mikrotemperaturstruktur den Mustersignalen zusätzliche Laufzeiten von 0,1 ms bis 1 ms aufgeprägt werden und bei einer Ausbreitung des Sendeimpulses längs der Wasseroberfläche das Mustersignal um 1 ms zeitverschoben wird.

9. Verfahren nach einem der Ansprüche 1 bis 8, **dadurch gekennzeichnet, daß** ein Kompensationsterm für die Schallgeschwindigkeit aus der in °C gemessenen Temperatur durch Multiplikation mit der Zahl drei bestimmt wird und die mit der Ambiguity-Funktion ermittelte Laufzeit mit der durch den Kompensationsterm korrigierten Schallgeschwindigkeit multipliziert wird und die Entfernung liefert.

## Claims

1. Method for determining the range and velocity of a watercraft from the ambiguity function, in which transmission pulses which are reflected on the watercraft and have soundwaves with a high time/bandwidth product are received as echo signals and are compared with a set of pattern signals which are derived from the transmission pulses have a Doppler frequency shift, have a propagation time shift, and which predetermine velocities and ranges of the watercraft to be located, **characterized in that** data which is available on board relating to the sea state, water flows, water turbulence or a microtemperature structure for long distances in a sea region is used to determine frequency-dependent and/or propagation-time-dependent transmission characteristics for the transmitted soundwaves which propagate and are returned in the sea region, and these transmission characteristics are applied to the pattern signals.

2. Method according to Claim 1, **characterized in that**, in the case of the sea state, the pattern signal is modulated with the sea state signal whose mid-frequency is 200 mHz and with a sea state bandwidth which is dependent on the sea state level of up to 20 mHz.

3. Method according to one of Claims 1 or 2, **characterized in that**, if the water is turbulent, the frequency range of the pattern signals is extended by ±0.5 Hz.

4. Method according to Claim 1 or 2, **characterized in that** flow rates are determined, and associated Doppler shifts are calculated, from hydrographic details for the sea region, and are applied as a frequency shift to the pattern signals.

5. Method according to Claim 1, **characterized in that** echo signals reflected and received from the near field are demodulated using the transmission pulse and produce a sea state signal with which the pattern signals are modulated.

6. Method according to Claim 1, **characterized in that** a frequency spectrum of an echo signal which is reflected and received from a near field is determined, and a frequency shift with respect to the transmission pulse is determined, **in that** the frequency shift is applied as an additional Doppler shift to the pattern signals.

7. Method according to Claim 1 or 6, **characterized in that** a frequency spectrum is determined from a received echo signal which is reflected from a near field, and an increase in the frequency range in comparison to the transmission signal is determined and is applied to the pattern signals.

8. Method according to one of Claims 1 to 5, **characterized in that** additional propagation times of 0.1 ms to 1 ms are applied to the pattern signals as a function of the microtemperature structure and, if the transmission pulse is propagating along the water surface, the pattern signal is shifted in time by 1 ms.

9. Method according to one of Claims 1 to 8, **characterized in that** a compensation term for the speed of sound is determined from the temperature measured in °C by multiplication by the number three, and the propagation time determined using the ambiguity function is multiplied by the speed of sound as corrected by the compensation term, and produces the range.

## Revendications

1. Procédé de détermination de la distance et de la vitesse d'un véhicule nautique à partir de la fonction d'ambiguïté, avec lequel les impulsions émises réfléchies sur le véhicule nautique, lesquelles présentent des ondes sonores avec un produit temps-bande passante élevé, sont détectées sous la forme de signaux d'écho et comparées avec un ensemble de signaux de référence à décalage de fréquence doppler et à décalage de temps de propagation dérivés des impulsions émises, lesquels indiquent les vitesses et les distances du véhicule nautique à localiser, **caractérisé en ce que** les caractéristiques de transmission en fonction de la fréquence et/ou en fonction du temps de propagation sont déterminées à partir des données présentes à bord sur les vagues, les courants d'eau, les turbulences de l'eau ou une microstructure de température pour de grandes distances d'un domaine maritime pour les ondes sonores émises qui se propagent dans le domaine maritime et qui reviennent, puis sont superposées aux signaux de référence.

2. Procédé selon la revendication 1, **caractérisé en ce qu'**en cas de vagues, le signal de référence est modulé avec un signal de vagues dont la fréquence centrale est de 200 mHz et une largeur de bande de vagues qui dépend de l'intensité des vagues et qui peut atteindre 20 mHz.

3. Procédé selon l'une des revendications 1 à 2, **caractérisé en ce qu'**en présence d'eau turbulente, la plage de fréquences des signaux de référence est étendue de ±0,5 Hz.

4. Procédé selon la revendication 1 ou 2, **caractérisé en ce que** des vitesses de courant sont déterminées à partir des atlas des courants du domaine maritime et les décalages doppler correspondants sont calculés et superposés aux signaux de référence sous la forme d'un décalage de fréquence.

5. Procédé selon la revendication 1, **caractérisé en ce que** les signaux d'écho réfléchis et reçus depuis une zone de proximité sont démodulés avec l'impulsion émise et délivrent un signal de vague avec lequel sont modulés les signaux de référence.

6. Procédé selon la revendication 1, **caractérisé en ce qu'**un spectre de fréquences d'un signal d'écho réfléchi et reçu depuis une zone de proximité est déterminé et un décalage de fréquence par rapport à l'impulsion émise est déterminé, que le décalage de fréquence est superposé aux signaux de référence sous la forme d'un décalage doppler supplémentaire.

7. Procédé selon la revendication 1 ou 6, **caractérisé en ce qu'**un spectre de fréquences d'un signal d'écho réfléchi reçu depuis une zone de proximité est déterminé et une augmentation de la plage de fréquences par rapport au signal émis est déterminée et superposée aux signaux de référence.

8. Procédé selon l'une des revendications 1 à 5, **caractérisé en ce que** des temps de propagation supplémentaires compris entre 0,1 ms et 1 ms sont superposés aux signaux de référence en fonction de la microstructure de température et, lors d'une propagation de l'impulsion émise le long de la surface de l'eau, le signal de référence est décalé dans le temps de 1 ms.

9. Procédé selon l'une des revendications 1 à 8, **caractérisé en ce qu'**un terme de compensation pour la vitesse du son est déterminé à partir de la température mesurée en °C par une multiplication par le chiffre trois et le temps de propagation déterminé avec la fonction d'ambiguïté est multiplié par la vitesse du son corrigée avec le terme de compensation et délivre la distance.
